# EUROPEAN PATENT APPLICATION

(11) **EP 4 726 872 A1**
(43) Date of publication of application: **15.04.2026**
(21) Application number: 24818570.4
(22) Date of filing: 31.05.2024
(51) Int. Cl.: H01M 50/126, H01M 50/129, H01M 50/133

(54) **BATTERY**

(30) Priority: 06.06.2023 CN 202310658995
(71) Applicant: Ningde Amperex Technology Limited, Ningde, Fujian 352100 (CN)
(72) Inventor: HUANG, Zhiqi, Ningde, Fujian 352100 (CN); LI, Rui, Ningde, Fujian 352100 (CN); LI, Lin, Ningde, Fujian 352100 (CN); GUO, Peipei, Ningde, Fujian 352100 (CN)
(74) Representative: Dehns Germany Partnerschaft mbB
(86) International application number: PCT/CN2024/096647
(87) International publication number: WO 2024/251038

(57) **Abstract**

A battery (100) is provided, including an electrode assembly (20) and a packaging bag (10) configured to accommodate the electrode assembly (20), where the packaging bag (10) includes a nylon layer (16), the nylon layer (16) includes a coloring material, an average of color difference values L of the nylon layer (16) is greater than or equal to 6 and less than or equal to 12, and a standard deviation of the color difference values L of the nylon layer (16) is σ and satisfies σ≤0.2. The nylon layer (16) includes the coloring material, and during fabrication of the nylon layer (16), through adjusting an amount of the coloring material and a thickness of a nylon material, a color difference of the nylon layer (16) can be adjusted. Additionally, the average and standard deviation of the color difference values L of the nylon layer (16) satisfy the foregoing ranges, so that an even color difference can be achieved. Meanwhile, during preparation of the packaging bag (10), since the nylon layer (16) has coloration, the nylon layer (16) can be directly bonded to a metal layer (15), and therefore fillers such as black ink are not needed, thereby enhancing bonding between the nylon layer (16) and the metal layer (15) to improve mechanical strength and punching performance of the packaging bag (10).

## Description

### CROSS-REFERENCE TO RELATED APPLICATIONS

This application claims priority to Chinese Patent Application No. 202310658995.X, filed with the China National Intellectual Property Administration on June 6, 2023 and entitled "BATTERY", which is incorporated herein by reference in its entirety.

### TECHNICAL FIELD

This application relates to the field of electrochemical technology, and in particular, to a battery.

### BACKGROUND

With advantages such as good safety performance, light weight, large capacity under the same specifications, high cycle life, and flexible design, pouch batteries have been gradually applied in fields such as smartphones and new energy vehicles.

A packaging bag of a pouch battery typically includes a metal foil layer and a nylon layer disposed on an outer surface of the metal foil layer. To improve the appearance of the pouch battery, a conventional method involves providing a layer of black ink on the surface of the nylon layer, with the black ink bonded between an aluminum foil layer and the nylon layer through adhesive. Due to fillers such as ink, interfacial bonding between the nylon layer and the aluminum foil layer is weakened, resulting in reduced mechanical strength and punching performance of the aluminum-plastic film. Additionally, evenly dispersing fillers such as ink throughout the adhesive is difficult, leading to uneven coloration and poor effectiveness in addressing light pollution.

### SUMMARY

Some embodiments of this application aim to provide a battery to address the issues of weak mechanical strength and uneven coloration of battery packaging bag.

The following technical solutions are adopted in these embodiments of this application to resolve the technical issues.

This application provides a battery, including an electrode assembly and a packaging bag configured to accommodate the electrode assembly, where the packaging bag includes a nylon layer, the nylon layer includes a coloring material, an average of color difference values L of the nylon layer is *L̅* and satisfies 6≤*L̅*≤12, and a standard deviation of the color difference values L of the nylon layer is σ and satisfies σ≤0.2.

In the above technical solution, the nylon layer includes a coloring material. During fabrication of the nylon layer, by controlling an amount of the coloring material and the thickness of the outermost second sublayer of the nylon layer, a color difference of the nylon layer can be adjusted. Additionally, the average of the color difference values L of the nylon layer is *L̅* and satisfies 6≤*L̅*≤12, and the standard deviation of the color difference values L of the nylon layer is σ and satisfies σ<0.2, to achieve an even color difference. Meanwhile, during preparation of the packaging bag, since the nylon layer has coloration, the nylon layer can be directly bonded to a metal layer, and therefore fillers such as black ink are not needed, thereby enhancing bonding between the nylon layer and the metal layer to improve mechanical strength and punching performance of the packaging bag.

In some preferred embodiments, 7≤*L̅*≤9 and σ≤0.1. When *L̅* and σ are within the ranges, evenness of the color difference of the nylon layer can be further improved.

In some preferred embodiments, the nylon layer includes a first sublayer; or the nylon layer includes a plurality of first sublayers and a plurality of second sublayers, and the first sublayers and the second sublayers are alternately stacked along a first direction; or the nylon layer includes a first sublayer and two second sublayers, and the first sublayer is positioned between the two second sublayers; where the first sublayer includes the coloring material. The nylon layer including a first sublayer means that the nylon layer only includes the first sublayer and no second sublayer, or the nylon layer includes one first sublayer and one second sublayer, or the nylon layer includes multiple first sublayers and one second sublayer located on the outermost layer.

In some preferred embodiments, along the first direction, a thickness of an outermost second sublayer is Y mm, and the nylon layer satisfies Y=KX+b. The outermost layer refers to an outermost layer of the nylon layer in a direction facing away from the center of the battery, where 2.6491≤K≤3.13, -0.1667≤b≤-0.0709, and X is a mass ratio of the coloring material to the nylon layer. By directly setting X and Y, a nylon layer with a specific color difference value L can be obtained, so that *L̅* is within the range of 6≤*L̅*≤12, and the standard deviation σ of the values L satisfies σ≤0.2, thereby achieving even color difference of the nylon layer.

In some preferred embodiments, the nylon layer includes a first sublayer and two second sublayers, where the first sublayer is positioned between the two second sublayers. The second sublayer not containing the coloring material has better polarity and is more easily bonded to a matte layer or the metal layer. Additionally, the first sublayer has lower requirements for heat resistance and polarity, and therefore lower-cost nylon can be used to reduce costs.

In some preferred embodiments, along the first direction, a thickness of the first sublayer is T1, a thickness of the second sublayer is T2, and 40% T2≤T1≤90% T2. This helps to improve evenness of coloration of the nylon layer.

In some preferred embodiments, along a first direction, a thickness of the nylon layer is T and satisfies 12 µm≤T≤35 µm.

In some preferred embodiments, 0<X≤0.1.

In some preferred embodiments, 0≤Y≤0.05.

In some preferred embodiments, a thickness of an outermost second sublayer is Y mm, X is a mass ratio of the coloring material to the nylon layer, and L=[-99.68*ln(X)-220.36]*Y-8.36*ln(X)-18.48. A value L of a packaging bag designed according to this formula satisfies 6≤*L̅*≤12 and σ<0.2, thereby facilitating even color difference.

In some preferred embodiments, the coloring material is selected from one or more of carbon black, titanium dioxide, cobalt oxide, nickel oxide, and antimony trioxide. Carbon black is used to produce a black masterbatch, that is, the nylon layer appears black; or carbon black and titanium dioxide are used to produce a gray masterbatch, that is, the nylon layer appears gray; or titanium dioxide and cobalt oxide are used to produce a green masterbatch, that is, the nylon layer appears green; or titanium dioxide, nickel oxide, and antimony trioxide may be used to produce a yellow masterbatch, that is, the nylon layer appears yellow.

In some preferred embodiments, the packaging bag further includes a metal layer and a sealing layer, the metal layer is positioned between the sealing layer and the nylon layer, the sealing layer faces the electrode assembly, and the nylon layer is positioned on a surface of the metal layer facing away from the electrode assembly.

In some preferred embodiments, the packaging bag further includes a matte layer, and the matte layer is disposed on a surface of the nylon layer facing away from the metal layer, further preventing light pollution, improving the appearance of the packaging bag, and making maintenance of the matte layer easier.

The above description is only an overview of the technical solutions of this application. To facilitate a clearer understanding of the technical means of this application, the technical solutions can be implemented in accordance with the descriptions of the specification. To make the above and other objectives, features, and advantages of this application more apparent and understandable, specific embodiments of this application are provided below.

### BRIEF DESCRIPTION OF DRAWINGS

One or more embodiments are described as examples with reference to corresponding drawings. The example descriptions do not constitute limitations on the embodiments. Elements with the same reference signs in the drawings represent similar elements. Unless otherwise specified, the drawings do not impose scale limitations.
FIG. 1 is a schematic structural diagram of a battery according to some embodiments of this application;
FIG. 2 is an exploded view of a battery according to some embodiments of this application;
FIG. 3 is a schematic structural diagram of a packaging bag according to some embodiments of this application;
FIG. 4 is a schematic structural diagram of a part of a packaging bag according to some embodiments of this application;
FIG. 5 is a schematic structural diagram of a packaging bag according to some embodiments of this application;
FIG. 6 is a schematic structural diagram of a single-layer nylon layer according to some embodiments of this application;
FIG. 7 is a schematic structural diagram of a two-layer nylon layer according to some embodiments of this application;
FIG. 8 is a schematic structural diagram of a three-layer nylon layer according to some embodiments of this application;
FIG. 9 is a schematic structural diagram of a three-layer nylon layer according to some embodiments of this application;
FIG. 10 is a schematic diagram of a relationship between Y and X according to some embodiments of this application; and
FIG. 11 is a schematic diagram of a relationship between Y and X according to some embodiments of this application.

### Description of reference signs:

100. battery;
10. packaging bag; 11. accommodation cavity; 12. first bag body; 121. first pit cavity; 13. second bag body; 131. second pit cavity; 14. sealing layer; 15. metal layer; 16. nylon layer; 161. first sublayer; 162. second sublayer; 17. matte layer;
20. electrode assembly; and
Z. first direction.

### DETAILED DESCRIPTION

Some embodiments of technical solutions of this application are described in detail below with reference to the drawings. The following embodiments are merely intended to provide clearer descriptions of the technical solutions of this application and are used as examples, and do not constitute limitations on the protection scope of this application.

In the descriptions of the embodiments of this application, technical terms such as "first" and "second" are used only to distinguish different objects and should not be understood as indication or implication of relative importance or implying a quantity, specific order, or primary-secondary relationship of the indicated technical features. In the descriptions of the embodiments of this application, "plurality" means two or more, unless explicitly and specifically limited otherwise.

In this specification, reference to an "embodiment" means that specific features, structures, or characteristics described with reference to the embodiment may be included in at least one embodiment of this application. The appearance of this phrase in various places in the specification does not necessarily refer to the same embodiment, nor is it an independent or alternative embodiment mutually exclusive with other embodiments. Additionally, technical features involved in different embodiments of this application described below may be combined as long as they do not conflict with each other.

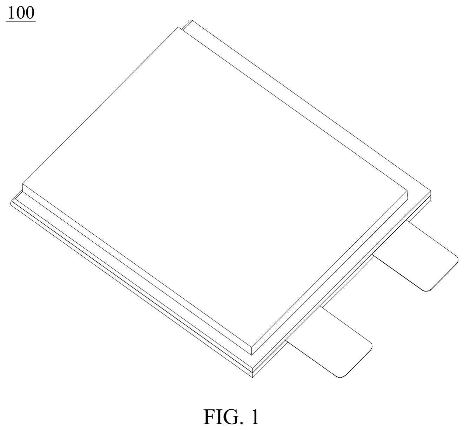

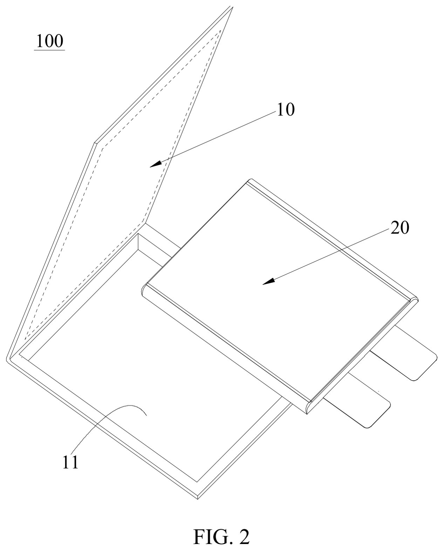

According to a first aspect, this application provides a battery 100. Refer to FIG. 1 and FIG. 2. The battery 100 includes an electrode assembly 20 and a packaging bag 10, where the packaging bag 10 encloses an accommodation cavity 11, and the electrode assembly 20 is accommodated within the accommodation cavity 11.

For the electrode assembly 20, the electrode assembly 20 may be a wound structure, including a first electrode plate (not shown), a separator (not shown), and a second electrode plate (not shown), where the first electrode plate, the separator, and the second electrode plate are stacked and wound. The first electrode plate and the second electrode plate have opposite polarities, and the separator is disposed between the first electrode plate and the second electrode plate to separate the two. In some other embodiments, the electrode assembly 20 may be a laminated structure, where the first electrode plate, the separator, and the second electrode plate are laminated.

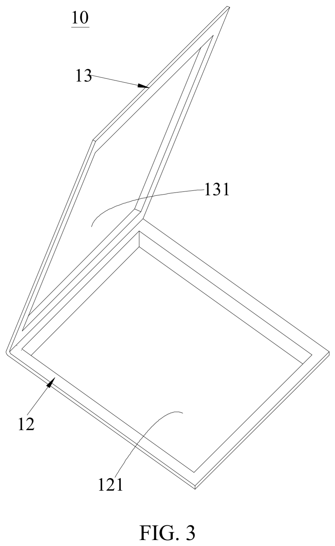

For the packaging bag 10, refer to FIG. 1 and FIG. 2. The packaging bag 10 encloses an accommodation cavity 11, where the electrode assembly 20 may be accommodated within the accommodation cavity 11, and the accommodation cavity 11 can further contain an electrolyte (not shown), where the electrolyte infiltrates the electrode assembly 20 within the accommodation cavity 11. Further refer to FIG. 3. For example, the packaging bag 10 includes a first bag body 12 and a second bag body 13, where the first bag body 12 is formed with a first pit cavity 121 through punching, the second bag body 13 is connected to the first bag body 12 and covers the first pit cavity 121, the first bag body 12 and the second bag body 13 together form the packaging bag 10, and the first pit cavity 121 forms the accommodation cavity 11. In some other embodiments, the first bag body 12 is formed with a first pit cavity 121 through punching, the second bag body 13 is formed with a second pit cavity 131 through punching, and when the first bag body 12 is connected to the second bag body 13, the first pit cavity 121 communicates with the second pit cavity 131 to form the accommodation cavity 11.

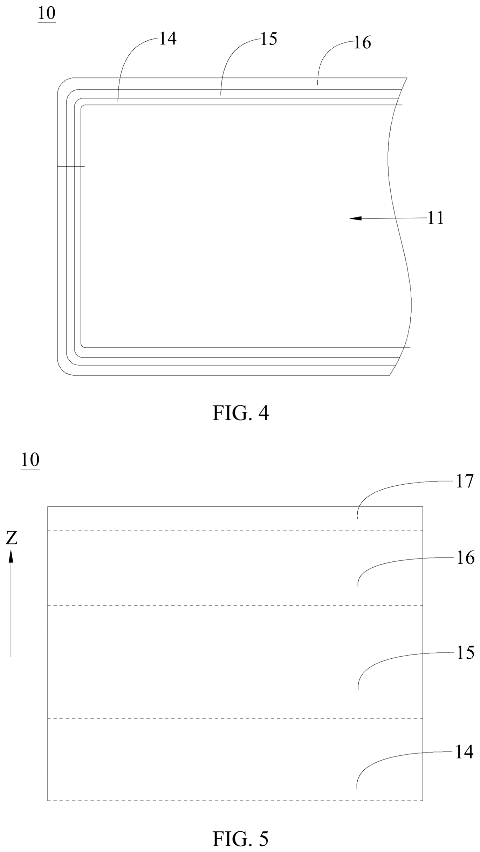

Refer to FIG. 4. The packaging bag 10 includes a sealing layer 14, a metal layer 15, and a nylon layer 16, where the metal layer 15 is disposed between the sealing layer 14 and the nylon layer 16, the sealing layer 14 faces the electrode assembly 20, and the nylon layer 16 is disposed on a surface of the metal layer 15 facing away from the electrode assembly 20 (the electrode assembly 20 is disposed in the accommodation cavity 11, and the electrode assembly 20 is not shown in the figure). The first bag body 12 and the second bag body 13 are both parts of the packaging bag 10, and both the first bag body 12 and the second bag body 13 include the sealing layer 14, the metal layer 15, and the nylon layer 16. The first bag body 12 and the second bag body 13 can be connected to form the packaging bag 10 through hot-press sealing, where the sealing layer 14 of the first bag body 12 faces the sealing layer 14 of the second bag body 13, and through hot-pressing edges of the first bag body 12 and the second bag body 13, the sealing layer 14 of the first bag body 12 and the sealing layer 14 of the second bag body 13 are melted and bonded, thereby sealing the accommodation cavity 11.

A material of the metal layer 15 may be aluminum or stainless steel, and the metal layer 15 is relatively dense, ensuring overall strength of the packaging bag 10 and further preventing moisture ingress, to ensure sealing performance of the packaging bag 10. The sealing layer 14 can isolate the metal layer 15 from the electrode assembly 20 and the electrolyte within the accommodation cavity 11, reducing corrosion of the metal layer 15 by the electrolyte. The sealing layer 14 may be made of polypropylene material. During hot-pressing the sealing layer 14 of the first bag body 12 and the sealing layer 14 of the second bag body 13, polypropylene melts for bonding, fixing the first bag body 12 and the second bag body 13 to form a complete packaging bag 10.

The nylon layer 16 has high toughness and is disposed as an outermost layer of the packaging bag 10, protecting the metal layer 15 and preventing external moisture ingress. The nylon layer 16 includes a coloring material, for example, by mixing a nylon material with the coloring material to form the nylon layer 16, where the coloring material is within the nylon layer 16 to alter a color of the nylon layer 16. Optionally, an average of color difference values L of the nylon layer 16 is *L̅* and satisfies 6≤*L̅*≤12, and a standard deviation of the color difference values L of the nylon layer 16 is σ and satisfies σ<0.2.

Herein, *L̅* refers to an average obtained through evenly selecting more than ten test points on the nylon layer 16; measuring a color difference value of each point using a colorimeter, where the color difference value L is an L value observed with a colorimeter at a 10° angle under a D65 standard light source; and calculating an average *L̅* of all the color difference values L. The standard deviation σ is calculated based on the L values and L.

In this embodiment, the nylon layer 16 includes the coloring material. During fabrication of the nylon layer 16, by controlling amounts of the coloring material and the nylon material, the color difference of the nylon layer 16 can be adjusted. Additionally, the average of the color difference values L of the nylon layer 16 is *L̅* and satisfies 6≤*L̅*≤12, and the standard deviation of the color difference values L of the nylon layer 16 is σ and satisfies σ<0.2, to achieve even color difference, thereby improving the performance of the packaging bag 10 with the nylon layer in addressing light pollution.

Further, 7≤*L̅*≤9 and σ<0.1. Within this range, evenness of the color difference of the nylon layer 16 can be further improved.

Refer to FIG. 5. Optionally, in some other embodiments, the packaging bag 10 further includes a matte layer 17, where the matte layer 17 is disposed on a surface of the nylon layer 16 facing away from the metal layer 15. The matte layer is relative to a glossy surface. A matte layer, as opposed to a flat layer, is a non-glossy surface, and can further prevent light pollution, improve the appearance of the packaging bag 10, and make maintenance of the matte layer 17 easier.

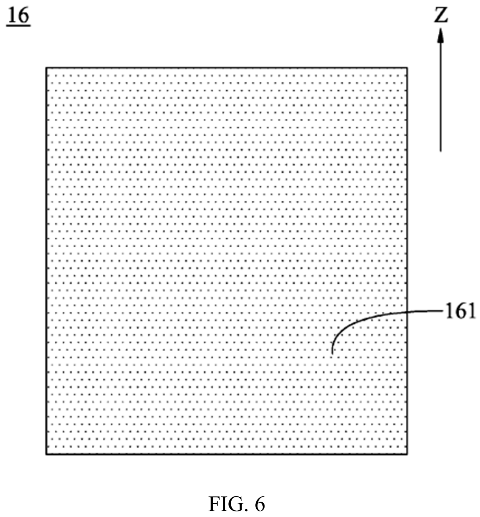

Refer to FIG. 6. In some embodiments, the nylon layer 16 is a single-layer structure, including only a first sublayer 161. The first sublayer 161 includes the coloring material. By disposing the first sublayer 161 on an outer surface of the metal layer 15, the appearance of the packaging bag 10 can be improved.

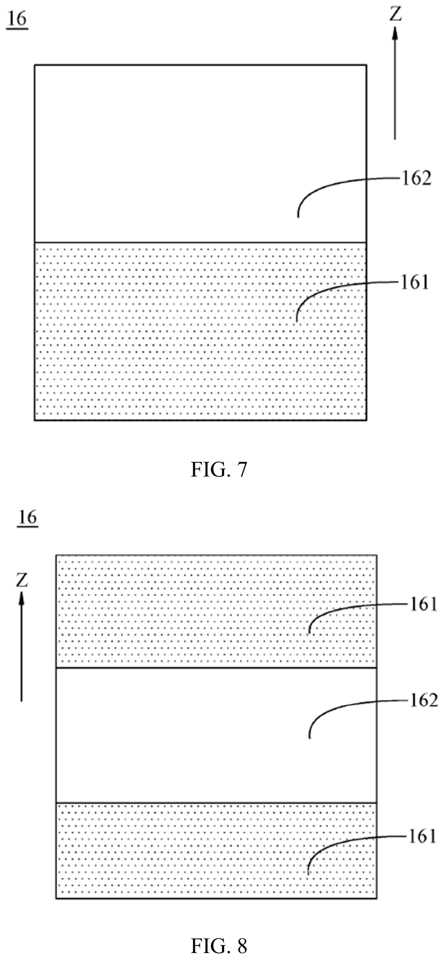

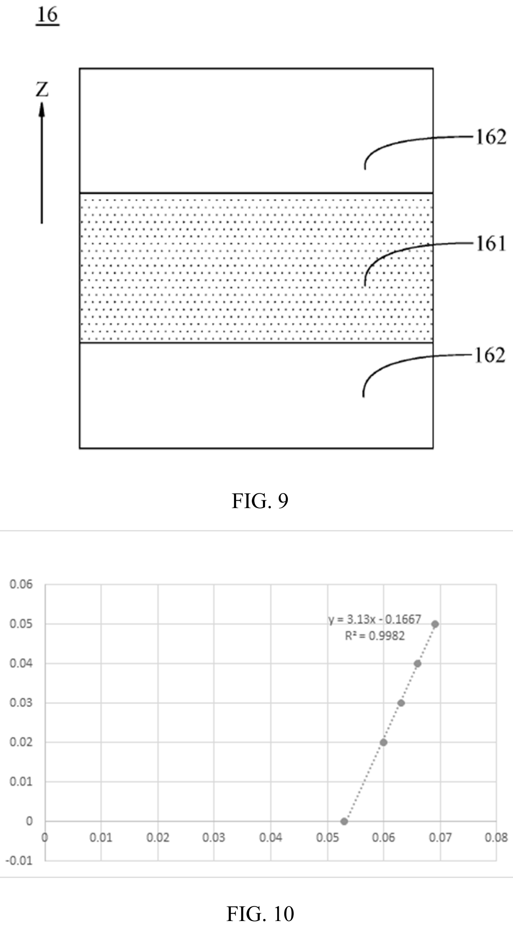

In some other embodiments, the nylon layer 16 includes a plurality of first sublayers 161 and a plurality of second sublayers 162, where the first sublayers 161 and the second sublayers 162 are alternately stacked along a first direction Z. Refer to FIG. 7. For example, when the nylon layer 16 is a two-layer structure, the nylon layer 16 includes one first sublayer 161 and one second sublayer 162, where either the first sublayer 161 or the second sublayer 162 may be in contact with the metal layer 15. Refer to FIG. 8. Preferably, when the nylon layer 16 is a three-layer structure, the nylon layer 16 may include two first sublayers 161 and one second sublayer 162, where the second sublayer 162 is disposed between the two first sublayers 161. Refer to FIG. 9. Alternatively, the nylon layer 16 includes one first sublayer 161 and two second sublayers 162, where the first sublayer 161 is disposed between the two second sublayers 162. In some other embodiments, the nylon layer 16 may be a four-layer, five-layer, or multilayer structure.

The second sublayer not containing the coloring material has better polarity and is more easily bonded to the matte layer or the metal layer. The first sublayer has lower requirements for heat resistance and polarity, and therefore lower-cost nylon can be used (that is, coloring material+lower-cost PA) to reduce costs. A PA material may be directly used for the second sublayer 162.

A thickness of the first sublayer 161 and a thickness of the second sublayer 162 can be set according to actual needs. For example, along a first direction Z, where the first direction is from the sealing layer to the nylon layer, a thickness of the first sublayer 161 is T1, a thickness of the second sublayer 162 is T2, and 40% T2≤T1≤90% T2. If the thickness of the first sublayer 161 is excessively large, fluctuations in a thickness of a middle layer may cause protrusions or depressions, potentially leading to absence or excessive thickness of the surface second sublayer 162, resulting in uneven coloration. If the thickness of the first sublayer 161 is excessively small, some areas may be unevenly colored due to small thickness. Therefore, in these embodiments of this application, preferably, 40% T2≤T1≤90% T2. This helps to improve evenness of the coloration of the nylon layer 16. Optionally, along the first direction Z, a thickness of the nylon layer 16 is T, where 12 µm≤T≤35 µm. The thickness of the metal layer 15 may be set to 35 µm to 50 µm, and the thickness of the sealing layer 14 may be set to 25 µm to 45 µm.

The coloring material may be one or more of carbon black, titanium dioxide, cobalt oxide, nickel oxide, and antimony trioxide. For example, carbon black is used to produce a black masterbatch, that is, the nylon layer 16 appears black; or carbon black and titanium dioxide are used to produce a gray masterbatch, that is, the nylon layer 16 appears gray; or titanium dioxide and cobalt oxide are used to produce a green masterbatch, that is, the nylon layer 16 appears green; or titanium dioxide, nickel oxide, and antimony trioxide may be used to produce a yellow masterbatch, that is, the nylon layer 16 appears yellow. The color combinations are diverse and not exhaustively listed in this application.

In some embodiments, the color difference value L=[-99.68*ln(X)-220.36]*Y-8.36*ln(X)-18.48. Herein, L is an L value observed with a colorimeter at a 10° angle under a D65 standard light source; X is a mass ratio of the coloring material to the nylon layer 16; when the nylon layer 16 is a multilayer (two or more layers) structure, a thickness of the outermost second sublayer 162 along the first direction Z is Y mm; and when the nylon layer 16 is a single-layer structure, that is, the nylon layer 16 includes only the first sublayer 161, Y=0.

Herein, 0<X≤0.1 and 0≤Y≤0.05. Optionally, the first sublayer 161 includes the coloring material, the second sublayer 162 may use PA (nylon material), and the nylon layer 16 satisfies Y=KX+b, where 2.6491≤K≤3.13 and -0.1667≤b≤ -0.0709.

In examples of this application, an aluminum-plastic film packaging bag with varying coloration is used as an example for testing value L.

A preparation method of the aluminum-plastic film is as follows. Carbon black was ground using a planetary ball mill, and when a particle size D50 of carbon black was between 20 nm and 300 nm, plasma treatment (vibration screening+conveyor belt+plasma treatment) was performed, followed by polarization treatment of carbon black. According to an in-situ polymerization method, the polarized carbon black was added to a reactor containing caprolactam, along with a coupling agent (silane coupling agent, titanate coupling agent, or hyperbranched polyester with multiple hydrocarbon groups) and an acid catalyst. After thorough mixing, a mixture was polymerized at high temperature, cooled, and separated, and then melt-extruded after drying to produce a black masterbatch. The prepared black masterbatch was mixed with PA6 pellets, and additives (silicon dioxide and oxidized polyethylene wax) were added, followed by single-pipe extrusion to prepare a single-layer black nylon layer, or multi-pipe extrusion to prepare multilayer black nylon. The black nylon layer and a PP sealing layer were bonded to two opposite surfaces of an aluminum foil to prepare the aluminum-plastic film packaging bag. (By adjusting an amount of carbon black, that is, adjusting a mass ratio of carbon black to the nylon layer, the coloration of the nylon layer can be altered.)

Value L test: An aluminum-plastic film packaging bag with varying coloration was laid flat on a surface and tested with a colorimeter, and data of values L at a 10° observation angle were collected. Ten different locations were tested, an average *L̅* was calculated, and a standard deviation σ was calculated based on the values L. Test results are shown in Table 1 below.

**Table 1**

| | *L̅* | σ | Number of spots | Color and text recognition |
|---|---|---|---|---|
| Example 1 | 6.12 | 0.15 | 2 | Relatively even coloration, relatively clear text recognition, and distinct contrast between packaging film and text |
| Example 2 | 7 | 0.09 | 0 | Even coloration, clear text recognition, and distinct contrast between packaging film and text |
| Example 3 | 8 | 0.08 | 0 | Even coloration, clear text recognition, and distinct contrast between packaging film and text |
| Example 4 | 9 | 0.07 | 0 | Even coloration, clear text recognition, and distinct contrast between packaging film and text |
| Example 5 | 9.85 | 0.1 | 0 | Even coloration and clear text recognition |
| Example 6 | 12 | 0.2 | 0 | Relatively even coloration and clear text recognition |
| Comparative example 1 | 5.72 | 0.25 | 30 | Uneven coloration and unclear recognition of some texts |
| Comparative example 2 | 13 | 0.15 | 0 | Unclear text recognition |
| Comparative example 3 | 8 | 0.3 | 0 | Uneven coloration |

It can be learned from Examples 1 to 6 in Table 1 that when 6≤*L̅*≤12, the aluminum-plastic film packaging bag exhibits even coloration and clear text recognition. It can be learned from Comparative example 1, when *L̅*=5.72, that is, *L̅*<6, due to uneven dispersion of the coloring material in the packaging film, the number of spots increases to 30, resulting in uneven coloration; and some texts overlap with spots, leading to unclear text recognition. It can be learned from Comparative example 2, when *L̅*=13, that is, *L̅*>12, the packaging film color is close to the text color and is excessively light, resulting in deterioration in text recognition. Therefore, in this application, 6≤*L̅*≤12. According to Examples 2 to 4, preferably, 7≤*L̅*≤9, because when *L̅* is within this range, the aluminum-plastic film packaging bag exhibits even coloration, no spots, clear text recognition, and distinct contrast between the packaging film and text.

The standard deviation reflects a dispersion degree of a dataset, and the standard deviation σ reflects evenness of the coloration of the aluminum-plastic film packaging bag. According to Table 1, as the standard deviation σ gradually increases, the evenness of coloration gradually deteriorates. When the standard deviation σ=0.2, the coloration is relatively even, but when the standard deviation σ=0.25, the color evenness decreases, affecting text recognition. Therefore, in these embodiments of this application, σ≤0.2. According to Examples 2 to 5, preferably, σ<0.1, because when σ is within this range, the aluminum-plastic film packaging bag exhibits even coloration, clear text recognition, and distinct contrast between the packaging film and text.

### Relationship between Y and X

During the implementation of this application, the inventors of this application have found that the color difference value L, the mass ratio X of the coloring material to the nylon layer, and a thickness Y mm of the outermost second sublayer satisfy L=[-99.68*ln(X)-220.36]*Y-8.36*ln(X)-18.48. A value L in a packaging bag designed according to this formula more easily satisfies 6≤*L̅*≤12 and σ≤0.2, thereby facilitating even coloration. To derive the relationship between X and Y, in these embodiments of this application, an aluminum-plastic film packaging bag is used as an example for further test of value L of the aluminum-plastic film packaging bag, where the value L test may be based on the above embodiments.

### Preparation of aluminum-plastic film packaging bag

### Example 7

A planetary ball mill was used to grind m parts of carbon black by mass. When a particle size D50 of carbon black was between 20 nm and 300 nm, plasma treatment (vibration screening+conveyor belt+plasma treatment) was performed, followed by polarization treatment of carbon black. In this case, uneven coloration caused by carbon black aggregation during polymerization can be addressed. According to an in-situ polymerization method, the polarized carbon black was added to a reactor containing caprolactam, along with a coupling agent (silane coupling agent, titanate coupling agent, or hyperbranched polyester with multiple hydrocarbon groups) and an acid catalyst. After thorough mixing, a mixture was polymerized at high temperature, cooled, and separated, and then melt-extruded after drying to produce a black masterbatch. The prepared black masterbatch was mixed with PA6 pellets, and additives (silicon dioxide and oxidized polyethylene wax) were added, followed by single-pipe extrusion to prepare a single-layer black nylon layer, where a mass of the black nylon layer is M. The black nylon layer and a PP sealing layer were bonded to two opposite surfaces of an aluminum foil to prepare the aluminum-plastic film packaging bag. Herein, m/M=0.053.

### Example 8

A planetary ball mill was used to grind m parts of carbon black by mass. When a particle size D50 of carbon black was between 20 nm and 300 nm, plasma treatment (vibration screening+conveyor belt+plasma treatment) was performed, followed by polarization treatment of carbon black. In this case, uneven coloration caused by carbon black aggregation during polymerization can be addressed. According to an in-situ polymerization method, the polarized carbon black was added to a reactor containing caprolactam, along with a coupling agent (silane coupling agent, titanate coupling agent, or hyperbranched polyester with multiple hydrocarbon groups) and an acid catalyst. After thorough mixing, a mixture was polymerized at high temperature, cooled, and separated, and then melt-extruded after drying to produce a black masterbatch. The prepared black masterbatch was mixed with PA6 pellets with a surface (a second sublayer) being PA6, and additives (silicon dioxide and oxidized polyethylene wax) were added, followed by dual-pipe extrusion to prepare a two-layer black nylon layer (a two-layer structure with a first sublayer and a second sublayer). The black nylon layer and a PP sealing layer were bonded to two opposite surfaces of an aluminum foil to prepare the aluminum-plastic film packaging bag. Herein, m/M=0.06, and a thickness of an outermost second sublayer is Y mm, where Y=0.02.

### Example 9

A planetary ball mill was used to grind m parts of carbon black by mass. When a particle size D50 of carbon black was between 20 nm and 300 nm, plasma treatment (vibration screening+conveyor belt+plasma treatment) was performed, followed by polarization treatment of carbon black. In this case, uneven coloration caused by carbon black aggregation during polymerization can be addressed. According to an in-situ polymerization method, the polarized carbon black was added to a reactor containing caprolactam, along with a coupling agent (silane coupling agent, titanate coupling agent, or hyperbranched polyester with multiple hydrocarbon groups) and an acid catalyst. After thorough mixing, a mixture was polymerized at high temperature, cooled, and separated, and then melt-extruded after drying to produce a black masterbatch. The prepared black masterbatch was mixed with PA6 pellets with a surface (an upper second sublayer) and a bottom (a lower second sublayer configured to bond to a metal layer) being PA6, and additives (silicon dioxide and oxidized polyethylene wax) were added, followed by multi-pipe extrusion to prepare a three-layer black nylon layer. The black nylon layer and a PP sealing layer were bonded to two opposite surfaces of an aluminum foil to prepare the aluminum-plastic film packaging bag. Herein, m/M=0.063, and a thickness of an outermost second sublayer is Y mm, where Y=0.03.

### Example 10

A difference from Example 9 was that m/M=0.066 and Y=0.04.

### Example 11

A difference from Example 9 was that m/M=0.069 and Y=0.05.

### Example 12

A difference from Example 7 was that m/M=0.0265.

### Example 13

A difference from Example 8 was that m/M=0.0345.

### Example 14

A difference from Example 9 was that m/M=0.0385.

### Example 15

A difference from Example 9 was that m/M=0.042 and Y=0.04.

### Example 16

A difference from Example 9 was that m/M=0.0452 and Y=0.05.

Test results are shown in Table 2 and Table 3 below.

**Table 2**

| | X | Y (mm) | L̅ |
|---|---|---|---|
| Example 7 | 0.053 | 0 | 6.08 |
| Example 8 | 0.06 | 0.02 | 6.24 |
| Example 9 | 0.063 | 0.03 | 6.29 |
| Example 10 | 0.066 | 0.04 | 6.27 |
| Example 11 | 0.069 | 0.05 | 6.18 |

**Table 3**

| | X | Y (mm) | L̅ |
|---|---|---|---|
| Example 12 | 0.0265 | 0 | 11.87 |
| Example 13 | 0.0345 | 0.02 | 11.97 |
| Example 14 | 0.0385 | 0.03 | 11.88 |
| Example 15 | 0.042 | 0.04 | 11.85 |
| Example 16 | 0.0452 | 0.05 | 11.82 |

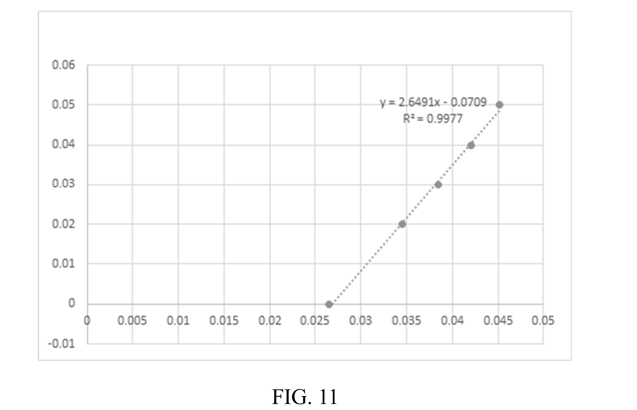

From Table 2, Table 3, FIG. 10, and FIG. 11, it can be learned that Y and X approximately satisfy a linear function Y=KX+b, where 2.6491≤K≤3.13, and -0.1667≤b≤-0.0709. Additionally, 0.0265≤X≤0.069 and 0≤Y≤0.05. When X and Y are within the ranges, a nylon layer with a specific color difference value L can be designed by directly calculating X and Y. To be specific, a black nylon layer is used as an example. Before preparing the black nylon layer, by adjusting an amount of the coloring material (a mass ratio of carbon black to the nylon layer) and adjusting a thickness of the outermost second sublayer (for a single-layer structure, there is no second sublayer, that is, Y=0), the value L can be adjusted to fall in the range of 6≤L≤12. When 6≤L≤12, *L̅* more easily satisfies 6≤*L̅*≤12, thereby facilitating even color difference.

For example, a planetary ball mill was used to grind 3 parts of carbon black (by mass). When a particle size D50 of carbon black was between 20 nm and 300 nm, plasma treatment (vibration screening+conveyor belt+plasma treatment) was performed, followed by polarization treatment of carbon black. In this case, uneven coloration caused by carbon black aggregation during polymerization can be addressed. According to an in-situ polymerization method, the polarized carbon black was added to a reactor containing 94.5 parts of caprolactam, along with 0.2 parts of coupling agent (silane coupling agent, titanate coupling agent, or hyperbranched polyester with multiple hydrocarbon groups) and an acid catalyst. After thorough mixing, a mixture was polymerized at high temperature, cooled, and separated, and then melt-extruded after drying to produce a black masterbatch. The prepared black masterbatch was mixed with 100 parts of PA6 pellets, and 2 parts of additives (1 part of silicon dioxide and 1 part of oxidized polyethylene wax) were added, followed by single-pipe extrusion to prepare a single-layer black nylon layer. The black nylon layer and a PP sealing layer were bonded to two opposite surfaces of an aluminum foil to prepare the aluminum-plastic film packaging bag.

For another example, a planetary ball mill was used to grind 3 parts of carbon black. When a particle size D50 of carbon black was between 20 nm and 300 nm, plasma treatment (vibration screening+conveyor belt+plasma treatment) was performed, followed by polarization treatment of carbon black. In this case, uneven coloration caused by carbon black aggregation during polymerization can be addressed. According to an in-situ polymerization method, the polarized carbon black was added to a reactor containing 94.5 parts of caprolactam, along with 0.2 parts of coupling agent and an acid catalyst. After thorough mixing, a mixture was polymerized at high temperature, cooled, and separated, and then melt-extruded after drying to produce a black masterbatch. The prepared black masterbatch was mixed with 100 parts of PA6 pellets with a surface (a second sublayer) being 30 parts of PA6, and 2 parts of additives (1 part of silicon dioxide and 1 part of oxidized polyethylene wax) were added, followed by dual-pipe extrusion to prepare a dual-layer black nylon layer. The black nylon layer and a PP sealing layer were bonded to two opposite surfaces of an aluminum foil to prepare the aluminum-plastic film packaging bag.

For another example, a planetary ball mill was used to grind 3 parts of carbon black. When a particle size D50 of carbon black was between 20 nm and 300 nm, plasma treatment (vibration screening+conveyor belt+plasma treatment) was performed, followed by polarization treatment of carbon black. In this case, uneven coloration caused by carbon black aggregation during polymerization can be addressed. According to an in-situ polymerization method, the polarized carbon black was added to a reactor containing 94.5 parts of caprolactam, along with 0.2 parts of coupling agent and an acid catalyst. After thorough mixing, a mixture was polymerized at high temperature, cooled, and separated, and then melt-extruded after drying to produce a black masterbatch. The prepared black masterbatch was mixed with 100 parts of PA6 pellets with a surface (an upper second sublayer) being 30 parts of PA6 and a bottom (a lower second sublayer configured to bond to a metal layer) being 30 parts of PA6, and 2 parts of additives (1 part of silicon dioxide and 1 part of oxidized polyethylene wax) were added, followed by multi-pipe extrusion to prepare a three-layer black nylon layer. The black nylon layer and a PP sealing layer were bonded to two opposite surfaces of an aluminum foil to prepare the aluminum-plastic film packaging bag.

Thus, based on mass ratios of carbon black, caprolactam, coupling agent, PA6 pellets, and additives, after determining a thickness of the outermost second sublayer, the value L of the nylon layer can be determined.

In examples of this application, a black nylon layer was prepared based on the structure of Example 3, and an aluminum-plastic film packaging bag was prepared using the black nylon layer.

### Example 17

Based on the structure of Example 3, a black nylon layer with a thickness of 15 µm was prepared, the nylon layer was bonded to an outer surface of an aluminum foil, and a PP sealing layer was bonded to a surface of the aluminum foil facing away from the black nylon layer to form an aluminum-plastic film packaging bag with a thickness of 76 µm. Herein, thicknesses of the nylon layer, the metal layer, and the sealing layer were 15 µm, 30 µm, and 28 µm, respectively.

### Comparative example 4

A transparent nylon layer was bonded to a metal layer using a black adhesive, and a PP sealing layer was bonded to a surface of the metal layer facing away from the black adhesive to form an aluminum-plastic film packaging bag with a thickness of 76 µm.

### Comparative example 5

A nylon layer was bonded to a metal layer using transparent adhesive, where the nylon layer included a black ink layer and a transparent nylon layer, the black ink layer was positioned between the transparent nylon layer and the adhesive layer, and a PP sealing layer was bonded to a surface of the metal layer facing away from the nylon layer to form an aluminum-plastic film packaging bag with a thickness of 76 µm.

Tensile strength and elongation test: The packaging bag was cut into a sample strip of 100 mm*15 mm. One end of the sample strip in a length direction or a width direction was fastened to a lower end of a tensile testing machine, the other end was fastened to an upper end of the tensile testing machine, ensuring both ends were on a same vertical plane. An initial distance between the two ends was determined. The tensile testing machine was set to a stretching speed of 50 mm/min. The sample strip was stretched until the sample strip broke, and a tensile force at break and a displacement at break were recorded. The tensile force at break was the tensile strength, and the elongation was calculated as follows: displacement at break /initial distance*100%. The test results are shown in Table 4 below.

Ultimate punching test: A steel punch of 50*69 mm was used, with a top edge radius R of 0.6 mm, a side edge radius R of 2 mm, and a top angle of 1.8 mm. The die had a radius R of 0.6mm on four sides and a gap between the punch and the die was 0.25mm. The maximum depth without damaging the aluminum-plastic film was determined through actual operation. The test results are shown in Table 4 below.

**Table 4**

| Aluminum-plastic film thickness (µm) | Thickness (nylon layer/metal layer/sealing layer) (µm) | Solution | MD tensile strength (N/15mm) | TD tensile strength (N/15mm) | MD elongation (%) | TD elongation (%) | Ultimate punching (mm) | L̅ | σ |
|---|---|---|---|---|---|---|---|---|---|
| | | Comparative example 4 | 74.53 | 89.14 | 51.84 | 59.7 | 5.2 | 12.2 | 0.5 |
| 76 | 15/30/28 | Comparative example 5 | 77.01 | 83.79 | 50.8 | 50.98 | 5 | 5.12 | 1.2 |
| | | Example 17 | 80.21 | 92.44 | 60.44 | 68.18 | 5.5 | 8.2 | 0.1 |

From Table 4, it can be learned that, compared with the aluminum-plastic film packaging bags of Comparative examples 4 and 5, use of the nylon layer of this application effectively improves tensile strength, elongation, and punching performance.

In these examples of this application, the nylon layer includes a coloring material. During fabrication of the nylon layer, by controlling amounts of the coloring material and the nylon material, a color difference of the nylon layer can be adjusted. Additionally, the average of the color difference values L of the nylon layer is *L̅* and satisfies 6≤*L̅*≤12, and the standard deviation of the color difference values L of the nylon layer is σ and satisfies σ<0.2, to achieve an even color difference. Meanwhile, during preparation of the packaging bag, since the nylon layer has coloration, the nylon layer can be directly bonded to a metal layer, and therefore fillers such as black ink are not needed, thereby enhancing bonding between the nylon layer and the metal layer to improve mechanical strength and punching performance of the packaging bag.

Finally, it should be noted that the above embodiments are only used to illustrate the technical solutions of this application and are not intended to limit these solutions. Under the concept of this application, technical features in the above embodiments or different embodiments can also be combined, steps can be implemented in any order, and there are many other variations of different aspects of this application as described above, which are not provided in detail for brevity. Although this application is described in detail with reference to the foregoing embodiments, persons of ordinary skill in the art should understand that the technical solutions described in the foregoing embodiments can still be modified, or some technical features can be equivalently replaced. Such modifications or replacements do not cause the essence of the corresponding technical solutions to depart from the scope of the technical solutions of these embodiments of this application.

## Claims

1. A battery, comprising an electrode assembly and a packaging bag configured to accommodate the electrode assembly, wherein the packaging bag comprises a nylon layer, the nylon layer comprises a coloring material, an average of color difference values L of the nylon layer is *L̅* and satisfies 6≤*L̅*≤12, and a standard deviation of the color difference values L of the nylon layer is σ and satisfies σ≤0.2.

2. The battery according to claim 1, wherein 7≤*L̅*≤9 and σ≤0.1.

3. The battery according to claim 1, wherein the nylon layer comprises a first sublayer; or the nylon layer comprises a plurality of first sublayers and a plurality of second sublayers, and the first sublayers and the second sublayers are alternately stacked along a first direction; or the nylon layer comprises a first sublayer and two second sublayers, and the first sublayer is positioned between the two second sublayers; wherein
the first sublayer comprises the coloring material.

4. The battery according to claim 3, wherein along the first direction, a thickness of an outermost second sublayer is Y mm, and the nylon layer satisfies Y=KX+b; wherein
2.6491≤K≤3.13, -0.1667≤b≤-0.0709, and X is a mass ratio of the coloring material to the nylon layer.

5. The battery according to claim 3, wherein along the first direction, a thickness of the first sublayer is T1, a thickness of the second sublayer is T2, and 40% T2≤T1≤90% T2.

6. The battery according to claim 1, wherein along a first direction, a thickness of the nylon layer is T and satisfies 12 µm≤T≤35 µm.

7. The battery according to claim 4, wherein 0<X≤0.1.

8. The battery according to claim 4, wherein 0≤Y≤0.05.

9. The battery according to claim 4, wherein the color difference value L of the nylon layer satisfies L=[-99.68*ln(X) -220.36]*Y-8.36*ln(X)-18.48.

10. The battery according to claim 1, wherein along a first direction, a thickness of an outermost second sublayer is Y mm, and the color difference value L of the nylon layer satisfies L=[-99.68*ln(X)-220.36]*Y-8.36*ln(X)-18.48, wherein X is a mass ratio of the coloring material to the nylon layer.

11. The battery according to claim 1, wherein the coloring material is selected from one or more of carbon black, titanium dioxide, cobalt oxide, nickel oxide, and antimony trioxide.

12. The battery according to claim 1, wherein the packaging bag further comprises a metal layer and a sealing layer, the metal layer is positioned between the sealing layer and the nylon layer, the sealing layer faces the electrode assembly, and the nylon layer is positioned on a surface of the metal layer facing away from the electrode assembly.

13. The battery according to claim 12, wherein the packaging bag further comprises a matte layer, and the matte layer is disposed on a surface of the nylon layer facing away from the metal layer.
